(19) Europäisches Patentamt
European Patent Office
Office européen des brevets

(11) Publication number: **0 104 006**
**B1**

# (12) EUROPEAN PATENT SPECIFICATION

(45) Date of publication of patent specification: **30.04.86**

(51) Int. Cl.$^4$: **C 01 B 33/28**

(21) Application number: **83304929.9**

(22) Date of filing: **25.08.83**

(54) **High-silica mordenite and process for preparation thereof.**

(30) Priority: **26.08.82 JP 146910/82**

(43) Date of publication of application:
**28.03.84 Bulletin 84/13**

(45) Publication of the grant of the patent:
**30.04.86 Bulletin 86/18**

(84) Designated Contracting States:
**BE DE FR GB IT NL**

(56) References cited:
**EP-A-0 040 104**
**DD-A- 130 331**
**DE-B-1 089 736**
**GB-A-1 205 449**
**GB-A-1 218 883**
**US-A-3 436 174**

**THE AMERICAN MINERALOGIST, vol. 57, 1972, pages 1146-1151, Mineralogical Society of America, US; O.J. WHITTEMORE Jr.: "Synthesis of siliceous mordenites"**

(73) Proprietor: **TOYO SODA MANUFACTURING CO., LTD.**
**No. 4560, Ooaza Tonda Shinnanyo-shi**
**Yamaguchi-ken (JP)**

(72) Inventor: **Igawa, Kazushige**
**297-159 Oaza Tonda Shinnanyo-shi**
**Yamaguchi-ken (JP)**
Inventor: **Itabashi, Keiji**
**2-7 Kawasaki 1-chome Shinnanyo-shi**
**Yamaguchi-ken (JP)**
Inventor: **Fukushima, Toshihisa**
**2575, Oaza Tonda Shinnanyo-shi**
**Yamaguchi (JP)**

(74) Representative: **Bass, John Henton et al**
**REDDIE & GROSE 16 Theobalds Road**
**London WC1X 8PL (GB)**

**EP 0 104 006 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

(1) Field of the invention

This invention relates to a high-silica mordenite having a high benzene adsorption capacity and a process for the preparation thereof.

(2) Description of the prior art

As is seen from the fact that the term "zeolite" is derived from the Greek word "zein" (boiling stone), the zeolite is a crystalline aluminosilicate containing zeolitic water.

The basic structure of the zeolite comprises $SiO_4$ tetrahedrons having four oxygen atoms at apexes with the silicon atom being as the center and $AlO_4$ tetrahedrons having four oxygen atoms at apexes with the aluminum atom being as the center, where these $SiO_4$ tetrahedrons and $AlO_4$ tetrahedrons are regularly and three-dimensionally connected to one another while owning oxygen atoms jointly so that the O/(Al+Si) atomic ratio is 2. Negative charges of the $AlO_4$ tetrahedrons are electrically neutralized by coupling with cations of an alkali metal or alkaline earth metal. Various pores are formed, which sizes differ depending upon the particular manner of arrangement of the tetrahedrons. Ordinarily, water molecules and exchangeable cations are present in these pores. Products obtained by exchanging cations in zeolite with other appropriate cations are widely used as a molecular sieve having a function of selectively occluding a specific molecule in the pores thereof, a catalyst capable of advancing a certain reaction only in the pores thereof, an ion exchanger or a catalyst carrier.

Various zeolites differing in the crystal structure and chemical composition are known, and in these zeolites, the adsorbing properties, catalytic properties and ion exchanging properties are different according to the differences of the crystal structure and chemical composition. Different zeolite names are given to the respective zeolites. Zeolites are naturally produced, and at the present, those which are the same as the natural zeolites can be synthesized. Furthermore, even zeolites which do not naturally occur can be synthesized.

As the zeolite of the former type, that is, naturally occurring zeolites, there can be mentioned mordenite, offretite, erionite, clinoptilolite and chabazite, and as the zeolite of the latter type, that is, the synthetic zeolite, there are known many products such as zeolite A, zeolite X, zeolite Y, ZK-4 and ZSM-5. These zeolites can be discriminated from one another by X-ray powder diffraction patterns.

The mordenite intended in the present invention is distinguished from a natural mordenite and ordinarily called "synthetic mordenite" or "large port mordenite". The crystal of the mordenite is of the orthorhombic system and is characterized by the lattice constants *a*, *b* and *c* of 18.1 angstroms, 20.4 angstroms and 7.5 angstroms, respectively. The pores have a channel of the 12-membered rings of oxygen atoms having a pore diameter of 6.7×7.0 angstroms and a channel of the 8-membered rings of oxygen atoms having a pore diameter of 2.9×5.7 angstroms.

A typical X-ray diffraction pattern of mordenite powder is characterized by lattice spacings (dÅ) shown in Table 1, by which the mordenite is clearly distinguishable over other zeolites.

TABLE 1

| Spacing (dÅ) | 2θ (Degrees) by Kα doublet of Cu | Relative peak intensity (I) |
|---|---|---|
| 13.52 | 6.53 | 42 |
| 10.19 | 8.67 | 7 |
| 9.03 | 9.79 | 100 |
| 6.77 | 13.1 | 4 |
| 6.57 | 13.5 | 8 |
| 6.38 | 13.9 | 37 |
| 6.06 | 14.6 | 3 |
| 5.78 | 15.3 | 28 |
| 4.51 | 19.7 | 42 |
| 4.26 | 20.8 | 6 |
| 4.133 | 21.5 | 9 |
| 3.980 | 22.3 | 100 |
| 3.830 | 23.2 | 5 |
| 3.757 | 23.7 | 8 |
| 3.563 | 25.0 | 14 |
| 3.528 | 25.2 | 3 |
| 3.471 | 25.6 | 24 |
| 3.410 | 26.1 | 23 |
| 3.386 | 26.3 | 44 |
| 3.218 | 27.7 | 24 |
| 3.198 | 27.9 | 35 |
| 2.939 | 30.4 | 3 |
| 2.891 | 30.9 | 11 |
| 2.710 | 33.0 | 2 |
| 2.697 | 33.2 | 33 |
| 2.556 | 35.1 | 18 |
| 2.519 | 35.6 | 4 |
| 2.460 | 36.5 | 4 |

The source of Table 1 is "Zeolite Molecular Sieves", page 231, by Donald W. Breck, and the values for 2θ have been supplemented by us.

The value of 2θ and the relative intensity of mordenite differ more or less according to the synthesis

process, but all of zeolites obtained according to the present invention are included in the synthetic mordenite.

Mordenite is ordinarily represented by the following chemical formula:

$$Na_2O \cdot Al_2O_3 \cdot 10SiO_2 \cdot 6H_2O$$

Namely, mordenite is characteristic over other zeolites in that the $SiO_2/Al_2O_3$ molar ratio is 10 and higher than those of other zeolites. Mordenite is excellent in the heat resistance and acid resistance, and therefore, mordenite is widely used as an adsorbent or a catalyst in various industries. It has been found that in zeolites, increase of the $SiO_2/Al_2O_3$ molar ratio results in improvements of not only the heat resistance and acid resistance but also the catalytic properties as a solid acid, and therefore, high-silica zeolites represented by ZSM-5 developed by Mobil Oil Co. have recently attracted attention in the art.

However, an organic mineralizer such as a quaternary ammonium salt is used in the process for preparing a zeolite of the ZSM-5 type, and hence, this process is not advantageous. Furthermore, since the pore size of ZSM-5 is 5 to 6 angstroms and smaller than those of synthetic mordenite, uses of ZSM-5 are considerably limited.

Accordingly, development of an industrial process for preparing a mordenite having a high $SiO_2/Al_2O_3$ ratio is eagerly desired.

Various processes for increasing the $SiO_2/Al_2O_3$ molar ratio of mordenite above 10 have been proposed. For example, the following processes can be mentioned.

(1) Japanese Examined Patent Publication No. 51-15000 discloses a process in which after contact of mordenite with water vapor at high temperatures, a mineral acid treatment is repeated for removal of alumina by dissolution. However, since the $SiO_2/Al_2O_3$ molar ratio is increased over 10 by treating once-prepared mordenite, the process is complicated.

Moreover, pores of high-silica mordenite obtained by the dealuminization treatment crumble owing to the repetition of the mineral acid treatment, resulting in reduction of the heat resistance. Accordingly, the increase of the $SiO_2/Al_2O_3$ is practically limited, and other properties are not so improved as expected even if the $SiO_2/Al_2O_3$ molar ratio is increased.

(2) The report of O. J. Whittemore, Jr., American Mineralogist, Volumn 57, 1146—1151, 1972 discloses a process for preparing mordenite in which an alumina-silica gel having an $SiO_2/Al_2O_3$ molar ratio of 10.1 to 15.5 is prepared from a dilute aqueous solution of sodium silicate, a dilute aqueous solution of aluminum chloride and hydrochloric acid; and the alumina-silica gel is crystallized by heating the gel at 184°C for 16 hours, whereby a mordenite having an $SiO_2/Al_2O_3$ molar ratio of 12 to 19.5 is obtained. This process requires complicated steps of forming an alumina-silica gel in advance, adding this gel to an aqueous solution of sodium silicate after filtration, water washing and drying and subjecting the so-prepared starting composition to crystallization.

(3) Japanese Unexamined Patent Publication No. 56-160316 discloses a process for preparing a high-silica mordenite having an $SiO_2/Al_2O_3$ molar ratio of 15 to 25.8 from sodium silicate, aluminum sulfate, sulfuric acid and sodium chloride. From the industrial viewpoint, this process is not preferred because aluminum sulfate and sulfuric acid both having a highly corrosive action are used and a large amount of sodium chloride should be used as a mineralizer. Furthermore, from the results of the tracing experiments made by use, it has been confirmed that a high-silica mordenite having a high benzene adsorption cannot be obtained according to this process.

## Summary of the invention

It is a primary object of the present invention to provide a high-silica mordenite having a high purity, an $SiO_2/Al_2O_3$ molar ratio of 12 to 30 and a high benzene adsorption capacity, which can be obtained without using an organic mineralizer or inorganic mineralizer.

Other objects and advantages of the present invention will be apparent from the following description.

In one aspect of the present invention, there is provided a high-silica mordenite which is a synthetic mordenite prepared without performing the dealuminization treatment, said mordenite being characterized as having a composition expressed by the formula:

$$xNa_2O, Al_2O_3 \cdot (12\text{—}30)\ SiO_2 \cdot yH_2O$$

where x is about 1, y is 0 or a positive number and further characterized in that the amount of benzene adsorption is 7 to 10% by weight as determined at a temperature of 25°C under a vapor pressure of (35 mmHg) 46.7 m bar.

In another aspect of the present invention, there is provided a process for the preparation of a synthetic mordenite having a silica/alumina molar ratio of from 12 to 30, prepared without a dealuminization treatment and having a benzene adsorption of 7 to 10% by weight as determined at a temperature of 25°C under a vapor pressure of 46.7 m bar (35 mmHg) which process comprises:

(1) preparing a reaction mixture having a composition represented by the following oxide molar ratios:

$Na_2O/SiO_2=0.08—0.2$
$SiO_2/Al_2O_3=14—55$
$H_2O/Na_2O=100—300$

and

$H_2O/SiO_2=10—40$

by using synthetic amorphous silicic acid having an apparent specific gravity of from 0.05 to 0.45 g/ml as a silica source, the reaction mixture being devoid of organic or inorganic mineralizer, and

(2) heating the reaction mixture at a temperature of 140 to 180°C with stirring to effect crystallization.

Brief description of the drawing

Figs. 1 through 3 are X-ray powder X-ray diffraction patterns (Kα doublet of copper) of the high-silica mordenites obtained in Example 1, 2 and 4, respectively; and

Fig. 4 is an X-ray powder X-ray diffraction pattern of the product obtained in Comparative Example 2.

Description of the preferred embodiments

The preparation process of the present invention is characterized in that a specific silica source is used. Namely, the silica source used in the present invention is limited to synthetic amorphous silicic acid having an apparent specific gravity of from 0.05 to 0.45 g/ml, especially from 0.10 to 0.35 g/ml, as determined according to a method described hereinafter, that is, so-called white carbon. The process for the preparation of white carbon is not particularly critical, but, for example, a customary process for forming white carbon from water glass and sulfuric acid may be adopted. The apparent specific gravity of white carbon differs according to the particle size, the size of secondary particles and the specific surface area. Any white carbon can be used in the present invention if the above-mentioned requirement of the apparent specific gravity is satisfied.

When ordinary silica sources such as sodium silicate, silica sol, silica gel and siliceous natural products are used, a high-silica mordenite free of impurities cannot be obtained unless an organic or inorganic mineralizer is used. Furthermore, in this case, even if a mineralizer is used, a high-silica mordenite having a high benzene adsorption cannot be obtained.

The kind of the alumina source is not particularly critical. For example, there can be used aluminum oxide, aluminum hydroxide, sodium aluminate, aluminum sulfate and aluminum nitrate. An aqueous solution of sodium aluminate is most preferred as the alumina source.

Sodium hydroxide is preferably used as an alkaline adjusting agent.

In the present invention, it is indispensable that a reaction mixture having a composition represented by the following oxide molar ratios should be prepared from the silica source, the alumina source, the alkaline adjusting agent and water and subjected to the crystallization:

$Na_2O/SiO_2=0.08—0.20$
$SiO_2/Al_2O_3=14—55$
$H_2O/Na_2O=100—300$
$H_2O/SiO_2=10—40$

The process for forming this reaction mixture from the above-mentioned starting materials is not particularly critical. However, according to a preferred embodiment of the present invention, the alumina source and sodium hydroxide are dissolved in water, the silica source is incorporated into the solution with stirring, and then the resulting reaction mixture is charged in an autoclave where the reaction mixture is heated at 140 to 180°C with stirring to effect crystallization. The time required for the crystallization is 20 to 150 hours, though the crystallization time differs according to the heating temperature.

In the present invention, stirring during the crystallization is important. More specifically, it is preferred that the peripheral speed defined by the following formula:

$$\frac{(\pi)\ (d)\ (v)}{60}$$

wherein d stands for a maximum diameter (m) of a stirring vane during rotation and v stands for the stirring speed (rpm), by at least 0.1 m/sec.

If the peripheral speed is lower than 0.1 m/sec and thus the stirring is weak, a temperature unevenness is caused in the reaction mixture. Consequently, the crystallization of the product is insufficient and the crystallization degree is low or impurities such as analcime are readily formed. It is especially preferred that the stirring speed be at least 0.5 m/sec.

A preferred crystallization temperature is 150 to 170°C. In this case, the crystallization time is 40 to 80 hours.

The composition of the high-silica mordenite prepared according to the present invention can be expressed by the following formula:

$$xNa_2O \cdot Al_2O_3 \cdot (12\text{—}30)SiO_2 \cdot yH_2O$$

In the above formula, the value of x differs according to the degree of water washing, but the value of x is ordinarily about 1, and y is 0 or a positive number and also this value differs according to the degree of drying or dehydration.

The $SiO_2/Al_2O_3$ molar ratio of the product can be adjusted by the following methods. If a starting mixture having a higher $SiO_2/Al_2O_3$ molar ratio or a lower $Na_2O/SiO_2$ molar ratio is used, the $SiO_2/Al_2O_3$ molar ratio of the product is increased. If the $SiO_2/Al_2O_3$ molar ratio of the starting mixture is reduced or the $Na_2O/SiO_2$ molar ratio of the starting mixture is increased, the $SiO_2/Al_2O_3$ molar ratio of the product is reduced.

In order to increase the ratio of $SiO_2$ recovered as the crystal to $SiO_2$ used as the starting material, that is, the yield of $SiO_2$, it is preferred that the $Na_2O/SiO_2$ molar ratio of the starting mixture be low.

If the composition of the starting mixture is outside the range specified in the present invention, impurities are formed, an amorphous product is present in the product and the crystallization degree is not increased, and in an extreme case, the crystallization is not advanced at all.

From the viewpoint of the reaction operation, an amount of water used for the reaction is important. If the amount of water is too small, the stirring is impossible. In contrast, if the amount of water is too large, the amount of the obtained product per unit volume of the reaction vessel is reduced. It is preferred that the $H_2O/SiO_2$ molar ratio in the starting mixture be in the range of from 15 to 30.

In the present invention, it is not necessary to use an organic mineralizer such as a quaternary ammonium salt or an inorganic mineralizer such as sodium chloride in addition to the above-mentioned silica source, alumina, source, alkaline adjusting agent and water. This is one of important features of the process of the present invention.

After completion of the crystallization, solid-liquid separation is carried out according to customary procedures, and the recovered solid is sufficiently washed with water and dried to obtain a product.

The amount of benzene adsorption of the high-silica mordenite prepared according to the process of the present invention is in the range of from 7 to 10% by weight as determined at a temperature of 25°C under a benzene vapor pressure of 35 mmHg, which is much higher than the amount of benzene adsorption of commercially available mordenite Zeolon 100Na, that is, 5.8% by weight.

The reason why the high-silica mordenite of the present invention has a high benzene adsorption capacity has not been elucidated completely, but it is presumed that this effect is attained by the increased affinity of the mordenite with benzene, more specifically, not only by the high silica/alumina molar ratio, but also, by the increased purity and uniform and regular crystal structure obtained under the specific reaction conditions of the present invention, as well as by the fact that no mineralizing agent is used.

The high-silica mordenite prepared according to the process of the present invention is ion-exchanged with an appropriate cation by a known method in the powdery state or after molding. The high-silica mordenite is used in various fields, for example, as a dehydrating agent, an adsorptive separating agent or a catalyst. Furthermore, since the high-silica mordenite of the present invention has a very high benzene adsorption capacity, it can effectively be used as an adsorbent for benzene and other aromatic compounds, and it can also be used effectively as an alkylation or disproportionation catalysts.

The present invention will now be described in detail with reference to the following examples.

In the examples, the apparent specific gravity and the amount of benzene adsorption were determined as follows.

Apparent specific gravity

1 g of a sample is charged in a cylinder of an apparent specific gravity measuring apparatus, and a piston is inserted into the cylinder and quietly brought down into the sample while holding the piston lightly with fingers. The piston is allowed to stand still in this state for 30 minutes, and the height difference H (cm) between the piston and cylinder is measured and the apparent specific gravity is calculated according to the following formula:

$$\text{Apparent specific gravity} = \frac{1}{(H-1.2^{*})\times 3.8^{**}}$$

Note:

The apparent specific gravity measuring apparatus comprises a metallic cylinder and a piston to be adapted to the cylinder. The cylinder has an inner diameter of 2.2 cm and a depth of 11.5 cm, and the piston has a length of 12.7 cm and a weight of 190 g.

The apparent specific gravity measured by this method is expressed by the weight (g) of 1 ml of the sample compressed under a pressure of 50 $g/cm^2$.

*: 1.2=12.7−11.5

**: 3.8=area of cylinder=1.1×1.1×3.14

Amount of benzene adsorption

McBain-Baker type adsorption apparatus is used for the measurement. After about 1 g of a sample is activated at 350°C in vacuo for 2 hours, the sample is maintained at 25°C and benzene vapor is introduced under a pressure of 35 mmHg. The amount adsorbed of benzene is measured after passage of 3 hours.

Example 1

A vessel was charged with 7.16 liters of pure water, and 44.2 g of solid sodium hydroxide and 540 g of an aqueous solution of sodium aluminate ($Na_2O$=19.4% by weight, $Al_2O_3$=20.1% by weight, $H_2O$=60.5% by weight) were added. Then, 1.45 kg of white carbon (Nipsil supplied by Nippon Silica Industrial Co., Ltd. and having an apparent specific gravity of 0.14) was added to the mixture with stirring to obtain a reaction mixture having the following composition:

$$2.1Na_2O \cdot Al_2O_3 \cdot 20SiO_2 \cdot 400H_2O$$

This reaction mixture was charged in an autoclave having a capacity of 10 liters and was heated at 165°C for 48 hours with stirring at a peripheral speed of 1 m/sec to effect crystallization. Solid-liquid separation was carried out, and the recovered solid was sufficiently washed with water and then dried at 110°C to obtain a product having the following composition:

$$1.06Na_2O \cdot Al_2O_3 \cdot 17.4SiO_2 \cdot 0.2H_2O$$

The crystallization degree and the presence or absence of impurities are shown in Table 2. The X-ray diffraction pattern of the product is shown in Fig. 1.

Examples 2 through 5 and Comparative Examples 1 through 4

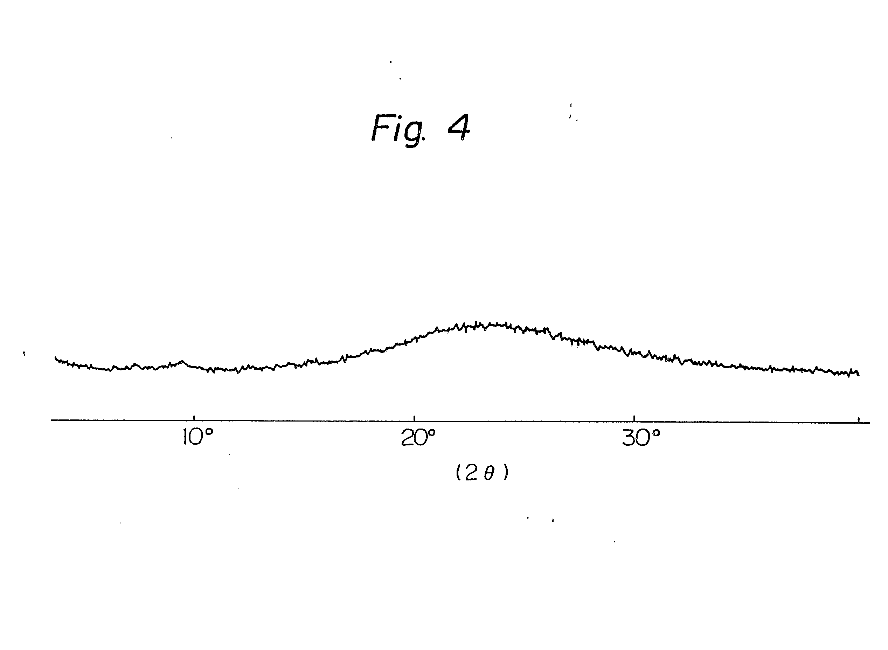

The procedures of Example 1 were repeated in the same manner except that the composition of the starting material, silica source and temperature and other conditions were changed as indicated in Table 2. Incidentally, an autoclave having a capacity of 1 liter was used for the crystallization. The obtained results are shown in Table 2. The X-ray diffraction patterns of the products obtained in Examples 2 and 4 and Comparative Example 2 are shown in Figs. 2, 3 and 4, respectively.

The silica sources in Table 2 are as follows:

A: Nipsil VN-3 supplied by Nippon Silica Industrial Co., Ltd. (apparent specific gravity=0.14).

B: Carplex #67 supplied by Shionogi Seiyaku (apparent specific gravity=0.17).

C: Silica Gel 70A supplied by Dokai Kagaku Kogyo (apparent specific gravity=0.5).

TABLE 2

| | Composition of starting mixture | | | | Crystallization conditions | | | Product | | | | |
|---|---|---|---|---|---|---|---|---|---|---|---|---|
| | $Na_2O/SiO_2$ | $SiO_2/Al_2O_3$ | $H_2O/Na_2O$ | $H_2O/SiO_2$ | Temperature (°C) | Time (hours) | Stirring speed (m/sec) | $SiO_2/Al_2O_3$ | Crystallization degree | Impurities | Silica source | Benzene adsorption (% by weight) |
| Example 1 | 0.105 | 20 | 190 | 20 | 165 | 48 | 1 | 17.4 | Good | None | A | 9.8 |
| Example 2 | 0.140 | 15 | 140 | 20 | 165 | 48 | 1 | 12.1 | Good | None | A | 8.5 |
| Example 3 | 0.123 | 30 | 160 | 20 | 165 | 48 | 1 | 22.7 | Good | None | A | 9.3 |
| Example 4 | 0.100 | 30 | 200 | 20 | 165 | 48 | 0.5 | 26.5 | Good | None | A | 7.7 |
| Example 5 | 0.180 | 50 | 110 | 20 | 165 | 48 | 1 | 22.8 | Good | None | B | 8.1 |
| Comparative Example 1 | " | " | " | " | " | " | 0 | — | Poor | — | B | |
| Comparative Example 2 | 0.105 | 20 | 190 | 20 | 165 | 48 | 1 | — | Amorphous | — | C | |
| Comparative Example 3 | 0.220 | 50 | 90 | 20 | 165 | 48 | 1 | — | Fairly good | Observed | A | |
| Comparative Example 4 | 0.070 | 15 | 290 | 20 | 165 | 48 | 1 | — | Poor | — | A | |
| Referential Example 1 | Tracing experiment of Example 1 of Japanese Unexamined Patent Publication No. 56-160316 | | | | | | | 17.0 | Good | None | | 4.6 |
| Referential Example 2 | Commercially available Zeolon 100Na | | | | | | | 11.2 | Good | None | | 5.8 |

**Claims**

1. A high-silica mordenite which is a synthetic mordenite prepared without performing the dealuminization treatment, said mordenite being characterized as having a composition expressed by the formula:

$$xNa_2O \cdot Al_2O_3 \cdot (12—30)SiO_2 \cdot yH_2O$$

where x is about 1, y is 0 or a positive number, and further characterized in that the amount of benzene adsorption is 7 to 10% by weight as determined at a temperature of 25°C under a vapor pressure of (35 mmHg) 46.7 m bar.

2. A process for the preparation of a synthetic mordenite having a silica/alumina molar ratio of from 12 to 30, prepared without a dealuminization treatment and having a benzene adsorption of 7 to 10% by weight as determined at a temperature of 25°C under a vapor pressure of 46.7 m bar (35 mmHg) which process comprises:

(1) preparing a reaction mixture having a composition represented by the following oxide molar ratios:

$Na_2O/SiO_2$=0.08—0.2
$SiO_2/Al_2O_3$=14—55
$H_2O/Na_2O$=100—300

and

$H_2O/SiO_2$=10—40

by using synthetic amorphous silicic acid having an apparent specific gravity of from 0.05 to 0.45 g/ml as a silica source, the reaction mixture being devoid of organic or inorganic mineralizer, and

(2) heating the reaction mixture at a temperature of 140 to 180°C with stirring to effect crystallization.

3. A process according to claim 2, wherein said synthetic amorphous silicic acid has an apparent specific gravity of from 0.10 to 0.35 g/ml.

4. A process according to claim 2 or 3, wherein an alumina source used for the preparation of said reaction mixture is at least one compound selected from the group consisting of aluminum oxide, aluminum hydroxide, sodium aluminate, aluminum sulfate and aluminum nitrate.

5. A process according to any one of claims 2 to 4, wherein said reaction mixture is prepared by incorporating the silica source into an aqueous solution of an alumina source and sodium hydroxide while the aqueous solution is stirred.

6. A process according to any one of claims 2 to 5, wherein said heating of the reaction mixture is carried out for a period of 20 to 150 hours.

7. A process according to any one of claims 2 to 5, wherein said heating of the reaction mixture is carried out at a temperature of 150 to 170°C for a period of 40 to 80 hours.

8. A process according to any one of claims 2 to 7, wherein said stirring of the reaction mixture carried out during heating for effecting crystallization is conducted under conditions such that the peripheral speed of a stirring vane defined by the formula:

$$\frac{(\pi)\ (d)\ (v)}{60}$$

be at least 0.1 m/sec, wherein d is a maximum diameter (m) of the stirring vane during rotation and v is a stirring speed (rpm).

9. A process according to any one of claims 2 to 8, wherein the amount of water used for the preparation of the reaction mixture is such that the $H_2O/SiO_2$ molar ratio in the starting mixture be in the range of from 15 to 30.

**Patentansprüche**

1. Ein synthetisches, ohne vorherige Behandlung zur Aluminiumabtrennung hergestelltes Mordenit-Produkt mit hohem Gehalt an $SiO_2$, das eine Zusammensetzung hat, die durch die Formel:

$$xNa_2O \cdot Al_2O_3 \cdot (12—30)SiO_2 \cdot yH_2O$$

ausgedrückt ist, orin x etwa 1, y 0 oder eine Zahl über 0 ist und weiter dadurch gekennzeichnet, daß die Menge der Benzol-Adsorption 7 bis 10 Gew.%, bestimmt bei einer Temperatur von 25°C unter einem Dampfdruck von 46,7 m bar (35 mmHg).

2. Verfahren zur Herstellung eines synthetischen Mordenit-Produktes, das molares Verhältnis von $SiO_2/Al_2O_3$ von 12 bis 30 hat und ohne Behandlung zur $Al_2O_3$-Abtrennung hergestellt ist und eine

Benzol-Adsorption von 7 bis 10 Gew.%, bestimmt bei einer Temperatur von 25°C unter einem Dampfdruck von 46,7 m bar (35 mmHg), dadurch gekennzeichnet,

(1) ein Reaktionsgemisch hergestellt wird, das eine Zusammensetzung hat entsprechend dem folgenden molaren Oxidverhältnis:

$Na_2O/SiO_2=0,08—0,2$
$SiO_2/Al_2O_3=14—55$
$H_2O/Na_2O=100—300$

und

$H_2O/SiO_2=10—40$

hergestellt wird, wobei synthetische amorphe Kieselsäure mit einem scheinbaren spezifischen Gewicht im Bereich von 0,05 bis 0,45 g/ml als Quelle für $SiO_2$ verwendet wird und das Reaktionsgemisch frei von organischen oder anorganischen Mineralisierungsstoffen ist, und

(2) das Reaktionsgemisch auf eine Temperatur von 140 bis 180°C unter Rühren erhitzt wird, um Kristallisation zu bewirken.

3. Verfahren gemäß Anspruch 2, dadurch gekennzeichnet, daß die synthetische amorphe Kieselsäure ein scheinbares spezifisches Gewicht von 0,10 bis 0,35 g/ml hat.

4. Verfahren gemäß Anspruch 2 oder 3, dadurch gekennzeichnet, daß eine $Al_2O_3$-Quelle zur Herstellung des Reaktionsgemisches verwendet wird, das aus mindestens einer Verbindung aus der Gruppe Aluminiumoxid, Aluminiumhydroxid, Natriumaluminat, Aluminiumsulfat und Aluminiumnitrat ist.

5. Verfahren gemäß einem der Ansprüche 2 bis 4, dadurch gekennzeichnet, daß das Reaktionsgemisch hergestellt wird, indem das Quellenprodukt für $SiO_2$ in eine wäßrige Lösung eines Quellenproduktes für $Al_2O_3$ und Natriumhydroxid eingegeben wird, während die wäßrige Lösung gerührt wird.

6. Verfahren gemäß einem der Ansprüche 2 bis 5, dadurch gekennzeichnet, daß das Reaktionsgemisch für 20 bis 150 Stunden erhitzt wird.

7. Verfahren gemäß einem der Ansprüche 2 bis 5, dadurch gekennzeichnet, daß das Reaktionsgemisch auf eine Temperatur von 150 bis 170°C während einer Zeit von 40 bis 80 Stunden erhitzt wird.

8. Verfahren gemäß einem der Ansprüche 2 bis 7, dadurch gekennzeichnet, daß das während des Erhitzens zur Bewirkung von Kristallisation durchgeführte Rühren unter Bedingungen ausgeführt wird, die derart sind, daß die Umfangsgeschwindigkeit des Rührwerkzeugs entsprechend der Formel:

$$\frac{(\pi)\ (d)\ (v)}{60}$$

mindestens 0,1 m/sec ist, worin der maximale Durchmesser (m) des Rührwerkzeugs während der Rotation und v die Rührgeschwindigkeit (rpm) ist.

9. Verfahren gemäß einem der Ansprüche 2 bis 8, dadurch gekennzeichnet, daß die zur Herstellung des Reaktionsgemisches eingesetzte Menge Wasser derart ist, daß das $H_2O/SiO_2$-Molverhältnis im Ausgangsgemisch im Bereich von 15 bis 30 liegt.

**Revendications**

1. Mordénite à teneur élevée en silice, qui est une mordénite synthétique préparée sans traitement d'élimination de l'alumine, ladite mordénite étant caractérisée comme ayant une composition exprimée par la formule:

$$xNa_2O \cdot Al_2O_3 \cdot (12—30)SiO_2 \cdot yH_2O$$

dans laquelle x est environ 1, y est 0 ou un nombre positif, et étant caractérisée en outre en ce que la capacité d'adsorption du benzène est de 7 à 10% en poids, déterminée à une température de 25°C sous une pression de vapeur de 46,7 mbar (35 mm de Hg).

2. Procédé de préparation d'une mordénite synthétique ayant un rapport molaire silice/alumine de 12 à 30, obtenue sans traitement d'élimination de l'alumine, et ayant une capacité d'adsorption du benzène de 7 à 10% en poids, déterminée à une température de 25°C sous une pression de vapeur de 46,7 mbar (35 mm de Hg), lequel procédé consiste:

(1) à préparer un mélange réactionnel ayant une composition représentée par les rapports molaires des oxydes suivants:

$Na_2O/SiO_2=0,08—0,2$
$SiO_2/Al_2O_3=14—55$
$H_2O/Na_2O=100—300$

et

$H_2O/SiO_2=10—40$

en utilisant un acide silicique amorphe synthétique ayant un poids spécifique apparent de 0,05 à 0,45 g/ml comme source de silice, le mélange réactionnel ne contenant ni minéralisateur organique, ni minéralisateur inorganique, et

(2) à chauffer le mélange réactionnel à une température de 140 à 180°C en agitant pour effectuer la cristallisation.

3. Procédé selon la revendication 2, dans lequel l'acide silicique amorphe synthétique a un poids spécifique apparent de 0,10 à 0,35 g/ml.

4. Procédé selon la revendication 2 ou 3, dans lequel la source d'alumine utilisée pour la préparation du mélange réactionnel est au moins un composé choisi parmi l'oxyde d'aluminium, l'hydroxyde d'aluminium, l'aluminate de sodium, le sulfate de sodium et le nitrate d'aluminium.

5. Procédé selon l'une quelconque des revendications 2 à 4, dans lequel le mélange réactionnel est préparé en incorporant la source de silice dans une solution aqueuse d'une source d'alumine et d'hydroxyde de sodium, tout en agitant la solution aqueuse.

6. Procédé selon l'une quelconque des revendications 2 à 5, dans lequel on chauffe le mélange réactionnel pendant une période de 20 à 150 heures.

7. Procédé selon l'une quelconque des revendications 2 à 5, dans lequel le mélange réactionnel est chauffé à une température de 150 à 170°C pendant une période de 40 à 80 heures.

8. Procédé selon l'une quelconque des revendications 2 à 7, dans lequel le mélange réactionnel est agité pendant le chauffage pour effectuer la cristallisation, dans des conditions telles que la vitesse périphérique d'une palette d'agitation, définie par la formule

$$\frac{(\pi)\ (d)\ (v)}{60}$$

est d'au moins 0,1 m/s, d étant un diamètre maximal (m) de la palette d'agitation pendant la rotation et v étant une vitesse d'agitation (tours/mn).

9. Procédé selon l'une quelconque des revendications 2 à 8, dans lequel la quantité d'eau utilisée pour la préparation du mélange réactionnel est telle que le rapport molaire $H_2O/SiO_2$ dans le mélange de départ soit compris entre 15 et 30.

Fig. 1

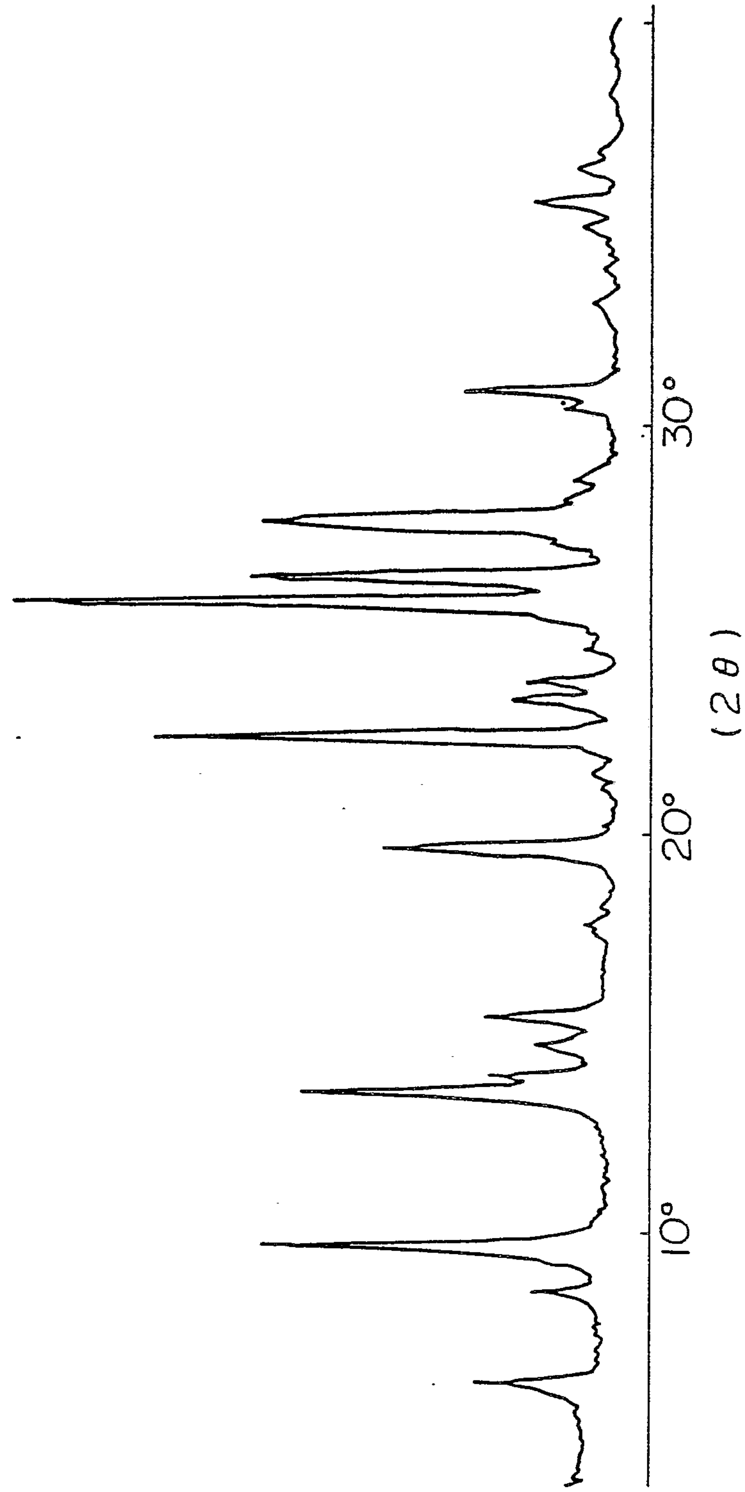

Fig. 2

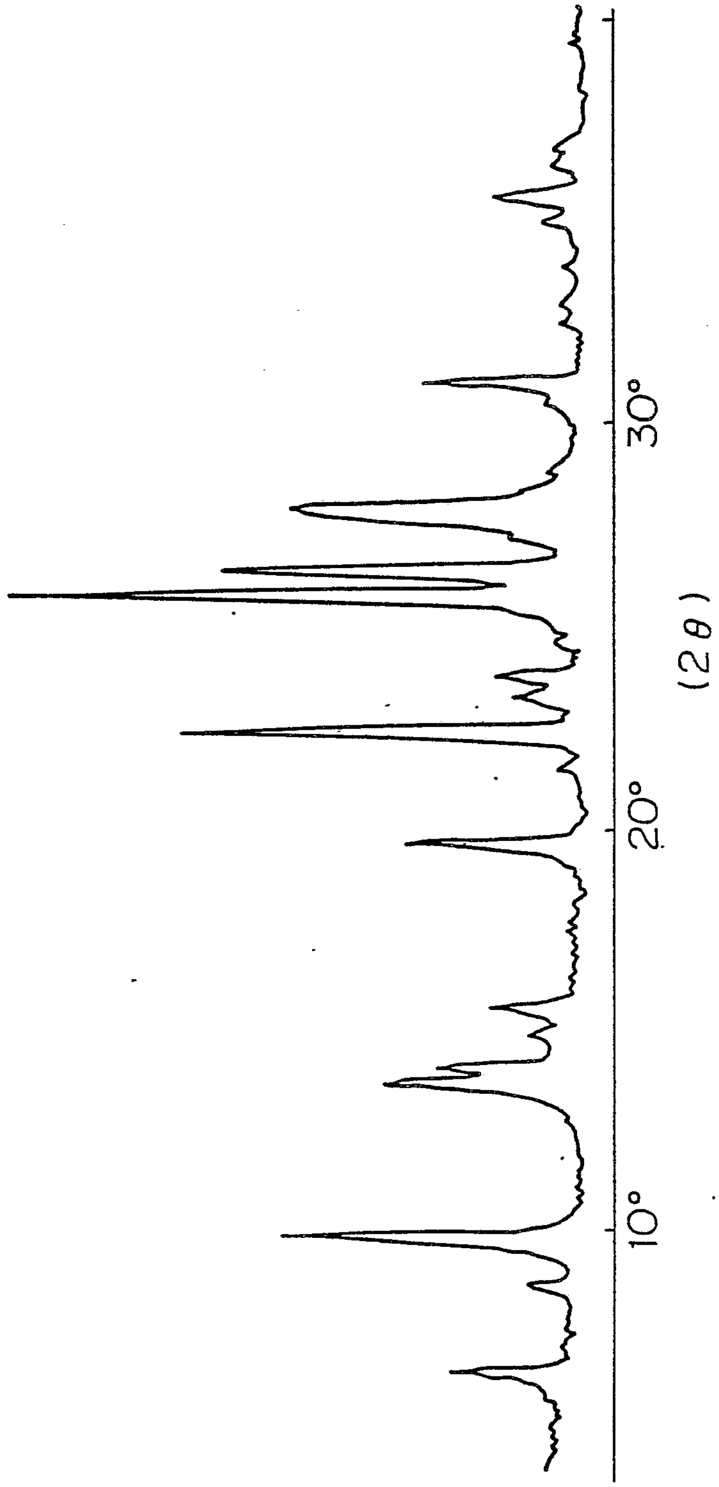

Fig. 3

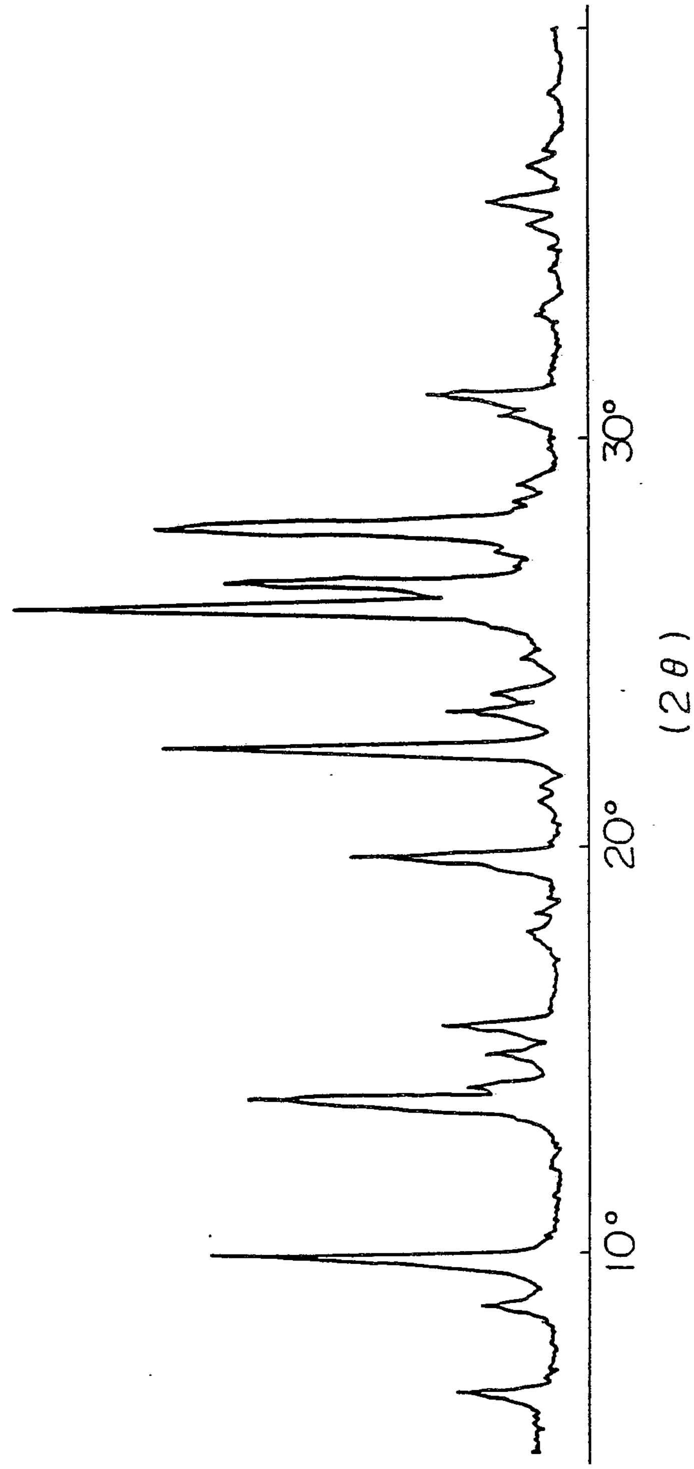

Fig. 4